**Europäisches Patentamt**

**European Patent Office**

**Office européen des brevets**

(19)

(11) Veröffentlichungsnummer : **0 101 784**
**B1**

(12)

# EUROPÄISCHE PATENTSCHRIFT

(45) Veröffentlichungstag der Patentschrift :
04.03.87

(51) Int. Cl.⁴ : **C 05 F 11/00**

(21) Anmeldenummer : **83103382.4**

(22) Anmeldetag : **07.04.83**

(54) **Verfahren zur Herstellung eines natürlichen Humusbildners und Düngers.**

(30) Priorität : **27.08.82 DE 3231884**

(43) Veröffentlichungstag der Anmeldung :
**07.03.84 Patentblatt 84/10**

(45) Bekanntmachung des Hinweises auf die Patenterteilung : **04.03.87 Patentblatt 87/10**

(84) Benannte Vertragsstaaten :
**AT BE CH DE FR GB IT LI NL SE**

(56) Entgegenhaltungen :
**EP-B- 0 004 632**
**DE-C- 675 866**
**FR-A- 1 000 183**
**FR-A- 2 123 042**
**FR-A- 2 193 798**
**FR-A- 2 236 814**
**US-A- 3 645 714**
**US-A- 3 953 191**
**Die Akte enthält technische Angaben, die nach dem
Eingang der Anmeldung eingereicht wurden und die
nicht in dieser Patentschrift enthalten sind.**

(73) Patentinhaber : **Ufheil, Egbert**
**Im Sommerhäldele 18**
**D-7601 Ortenberg (DE)**

(72) Erfinder : **Ufheil, Egbert**
**Im Sommerhäldele 18**
**D-7601 Ortenberg (DE)**

(74) Vertreter : **Dr.-Ing. Hans Lichti Dipl.-Ing. Heiner Lichti
Dipl.-Phys. Dr. Jost Lempert
Postfach 41 07 60 Durlacher Strasse 31
D-7500 Karlsruhe 41 (DE)**

**Beschreibung**

Die Erfindung betrifft ein Verfahren zur Herstellung eines natürlichen Humusbildners und Düngers aus zerkleinerter Baumrinde und gegebenenfalls weiteren Holz- oder Pflanzenabfällen, wobei die Rinde mit überhitztem Dampf behandelt und vor oder während der Dampfbehandlung ein Stickstoffträger zugesetzt wird.

Ein solches Verfahren ist z. B. aus der EP-B-0 004 632 bekannt. Die Behandlung der Rinde mit überhitztem Dampf bringt gegenüber der bis dahin herkömmlichen Rindenkompostierung den großen Vorteil, daß der Zellverband schnell und wirksam aufgelöst wird und die wachstumshemmenden Inhaltsstoffe zerstört werden, so daß das aufbereitete Material nach dem Ausbringen auf den Kulturboden sehr schnell mit Mikroorganismen besiedelt wird, verrottet und Humus bildet. Um dieses Material auch als Dünger einsetzen zu können, wird der Rinde ein schwer löslicher organischer Stickstoffträger, vorzugsweise biologischer Provenienz, zugegeben. Auf diese Weise wird das an sich ungünstige C/N-Verhältnis der Rinde zu Gunsten des Stickstoffgehaltes verändert, so daß nicht nur ein Humusbildner, sondern eine Stickstoffquelle für den Pflanzenaufbau bereitgestellt wird.

Es ist eine bekannte Tatsache, daß der dem Boden zugegebene Stickstoff der Pflanze langsam zufließen sollte, was sich mit den herkömmlichen synthetischen Stickstoffdüngern nicht erreichen läßt, da sie zu schnell vom Oberflächenwasser ausgewaschen, gegebenenfalls auch gelöst werden. Dies wiederum führt zu an sich unsinnig hohen Stickstoffgaben, um sicherzustellen, daß die Pflanzen zumindest den notwendigen Stickstoff erhält. Aus diesem Grunde sieht der zuvor zitierte Stand der Technik schwer lösliche Stickstoffträger organischer Art, insbesondere biologischer Abkunft vor. Diese schwer löslichen Stickstoffträger werden zwar bei der Dampfbehandlung im Reaktor chemisch teilweise zerlegt, gleichwohl stellen sie eine « langsam fließende Stickstoffquelle » dar, die als ideal für das Düngen betrachtet wird. Ungünstig bei diesem bekannten Verfahren ist die Tatsache, daß solche schwer löslichen Stickstoffträger organischen Aufbaus in synthetischer Form sehr teuer, in biologischer Form in der Regel mit größerem Balaststoff-Anteil befrachtet sind, was ihre Effizienz bei der Verbesserung des C/N-Verhältnisses beschränkt.

Die Zugabe von Stickstoff zu zur Kompostierung vorgesehene Rinde ist ebenfalls an sich aus der FR-A-21 23 042 bekannt.

Hier soll in einem Fermentator mit einer Luftzirkulation — die einen erhöhten Druck nicht erlaubt — bei einer Temperatur, die 70° nicht überschreiten soll, über 3 bis 5 Tage gearbeitet werden, wobei die in den Fermentator eingegebene Mischung neben Rinde und stickstoffhaltigen chemischen Substanzen noch gärfähige Substanzen, Bakterien- und Pilzkulturen sowie ein pufferndes und Flüssigkeit absorbierendes System, wie Kalk, Magnesium, Ton oder schon humifizierte organische Substanzen enthalten muß.

Die Stickstoffträger können dort aber ihre Wirkung nur ungenügend entfalten, weil die Verrottung der Rinde und die Zersetzung der Stickstoffträger in verschiedenen Zeiträumen erfolgt. Die Stickstoffträger zersetzen sich schneller als die Rinde, die im übrigen dort nur oberflächlich anrotten kann, so daß der Kompost nicht die günstigste Zusammensetzung aufweisen kann, Im Ergebnis ergibt sich hier ein Gemisch von zerrotteter Rinde und leicht auswaschbaren Stickstoffverbindungen. Das gleiche gilt in verstärktem Maße hinsichtlich der bio-chemischen Vorgänge für die US-A-3 645 714. Soweit dort eine gesteuerte Abgabe der aktiven Inhaltsstoffe, zu denen auch Herbizide und Pestizide gehören, behauptet wird, so ist dies bestenfalls durch die mechanisch-körperliche Ausgestaltung des Materials in Form von verdichteten Pellets mit einem relativ kleinen Oberflächen-Volumen-Verhältnis bedingt, wodurch Bakterien und Feuchtigkeit — rein (fluid) mechanisch — nur langsam von der Oberfläche in das Innere eindringen und die Kompostierung im Boden selbst nur äußerst langsam erfolgen kann. Hierzu trägt auch der Harzreichtum der unbehandelten Rinde bei, der eine schlechte Benutzbarkeit verursacht. Es wird hier nämlich nicht-kompostierte Rinde zu Pellets verpreßt, wobei solche mit kompaktierten Teilchen lockerem düngenden Humusbildner nichts zu tun haben.

Der Erfindung liegt die Aufgabe zugrunde, ein Verfahren vorzuschlagen, mit dessen Hilfe ein Humusbildner und Dünger zur Verfügung gestellt wird, dessen Herstellungskosten bei Verbesserung der C/N-Verhältnisse geringer sind und der eine langsam fließende Stickstoffquelle bietet.

Diese Aufgabe wird erfindungsgemäß dadurch gelöst, daß leicht lösliche Stickstoffträger zugegeben werden und das Gemisch aus Rinde und Stickstoffträger einer Dampfbehandlung mit mindestens 140 °C, ausgesetzt wird. Zu diesem Zweck wird Hoch- oder Niederdruckdampf mit einer Temperatur zwischen 140 und 600 °C eingesetzt. Je höher die Dampftemperatur, um so geringer ist die Behandlungsdauer.

Praktische Versuche haben überraschenderweise gezeigt, daß ein solchermaßen hergestellter Dünger den an sich leicht löslichen Stickstoff in relativ stabil gebundener Form enthält und nach Ausbringen auf dem Boden eine sehr langsame Abnahme des Stickstoffgehalts und damit eine entsprechend langsame Aufnahme durch die Pflanze erfolgt.

Der Stickstoffträger bzw. Bruchstücke desselben werden in die bei der Behandlung mit überhitztem Dampf frei werdenden Rindeninhaltsstoffe und deren Bruchstücke überführt.

Dieser Vorgang wird durch die stets vorhandene Anwesenheit von Bakterien begünstigt, die sich in einem solchermaßen behandelten Material überdurchschnittlich vermehren und körpereigene Proteinsubstanzen aufbauen, die dann gleichfalls als Stickstoffträger im Boden und an der Pflanze wirksam werden.

Das Bakterienwachstum wie auch das Pflanzenwachstum auf einem mit dem erfindungsgemäßen Material behandelten Boden wird nicht durch pathogene Keime gestört, da diese bei der Dampfbehandlung weitgehend abgetötet werden.

Als leicht lösliche Stickstoffträger bieten sich synthetische Stickstoffverbindungen, wie beispielsweise Harnstoffe, Harnstoff-Urease, Ammoniumbicarbonat, Kalksalpeter, Kalkkammonsalpeter, Oxamid, Ammoniumcarbamat, Ammoniakwasser, Ammoniumphosphat, Ammoniumsulfat, Ammoniumnitrat, Natriumnitrat und Kaliumnitrat an. Diese können gegebenenfalls in Lösung zugesetzt werden.

Zusätzlich können auch leicht lösliche natürliche Stickstoffträger, wie tierische Fäkalien, z. B. Hühnerkot, Rinderkot oder dergleichen zugesetzt werden. Auch Konfiskate und/oder biologische Müllabfälle in Suspension oder als Pressmasse kommen hierfür in Frage. Weiterhin können auch leicht lösliche Stickstoffträger, wie Fäkalien enthaltende andere Materialien, nämlich vorteilhafterweise anfallender Klärschlamm zugegeben werden. Auch die in solchen Produkten enthaltenen pathogenen und hygienisch bedenklichen Keime werden bei der Dampfbehandlung oberhalb 140 °C zerstört, so daß sie bei Ausbringen des Materials auf dem Boden keinen Schaden anrichten können.

Das zitierte Bakterienwachstum setzt in aller Regel von alleine ein, sei es bei der dem erfindungsgemäßen Verfahren folgenden Lagerung oder aber auch dann, wenn das behandelte Material in Säcken abgefüllt wird. Spätestens nach dem Ausbringen auf dem Boden beobachtet man ein sprunghaftes Ansteigen des mikrobiellen Wachstums.

Dieses Wachstum kann noch dadurch gefördert werden, daß dem Gemisch aus Rinde und Stickstoffträger Spurenelemente, z. B. Fe, Cu, Co, Mo, Zu, Mn, B, Mg oder dergleichen in reiner oder gelöster Form zugegeben werden. Ebenso läßt sich das Bakterienwachstum dadurch beschleunigen, daß das Endprodukt mit arteigenen Mikroorganismen geimpft wird. Dies kann entweder in Form der Zugabe von Reinkulturen der Mikroorganismen geschehen, vorzugsweise jedoch wird eine Teilmenge von abgelagertem Endprodukt, das bereits mit Mikroorganismen besiedelt ist, dem frisch hergestellten Endprodukt zugegeben.

## Patentansprüche

1. Verfahren zur Herstellung eines natürlichen Humusbildners und Düngers aus zerkleinerter Baumrinde und gegebenenfalls weiteren Holz- oder Pflanzenabfällen, wobei die Rinde mit überhitztem Dampf behandelt und vor oder während der Dampfbehandlung ein Stickstoffträger zugegeben wird, dadurch gekennzeichnet, daß leicht lösliche Stickstoffträger zugegeben werden und das Gemisch aus Rinde und Stickstoffträger einer Dampfbehandlung mit mindestens 140 °C ausgesetzt wird.

2. Verfahren nach Anspruch 1, dadurch gekennzeichnet, daß Hoch- oder Niederdruckdampf mit einer Temperatur bis zu 600 °C verwendet wird.

3. Verfahren nach Anspruch 1 oder 2, dadurch gekennzeichnet, daß als Stickstoffträger synthetische Stickstoffverbindungen zugegeben werden.

4. Verfahren nach Anspruch 3, dadurch gekennzeichnet, daß die synthetischen Stickstoffverbindungen in Lösung zugegeben werden.

5. Verfahren nach einem der vorangehenden Ansprüche, dadurch gekennzeichnet, daß zusätzlich tierische Fäkalien, wie Hühnerkot, Rinderkot oder dergleichen zugegeben werden.

6. Verfahren nach einem der vorangehenden Ansprüche, dadurch gekennzeichnet, daß zusätzlich Konfiskate und/oder Klärschlamm und/oder biologische Müllabfälle in Suspension oder als Preßmasse zugegeben werden.

7. Verfahren nach einem der Ansprüche 1 bis 6, dadurch gekennzeichnet, daß dem Gemisch aus Rinde und Stickstoffträger Spurenelemente, z. B. Fe, Cu, Co, Mo, Zn, Mn, B, Mg, in gelöster Form zur Beschleunigung des Wachstums der Mikroorganismen zugegeben werden.

8. Verfahren nach einem der Ansprüche 1 bis 7, dadurch gekennzeichnet, daß das Endprodukt nach der Dampfbehandlung mit arteigenen Mikroorganismen geimpft wird.

9. Verfahren nach Anspruch 8, dadurch gekennzeichnet, daß Reinkulturen der Mikroorganismen in fester oder suspendierter Form oder ein nach dem Ablagern mit Mikroorganismen bereits besiedeltes Endprodukt als Impfmaterial zugegeben wird.

## Claims

1. Process for producing a natural humus forming agent and fertilizer from comminuted tree bark and optionally further wood or plant waste, the bark being treated with superheated steam and a nitrogen carrier is added before or during steam treatment, characterized in that readily soluble nitrogen carriers are added and the mixture of bark and nitrogen carriers undergoes a steam treatment at at least 140 °C.

2. Process according to claim 1, characterized in that high or low pressure steam with a temperature up to 600 °C is used.

3. Process according to claims 1 or 2, characterized in that synthetic nitrogen compounds are added as nitrogen carriers.

4. Process according to claim 3, characterized in that synthetic nitrogen compounds in solution are added.

5. Process according to one of the preceding claims, characterized in that additional animal feces are added, such as those of chickens, cattle or the like.

6. Process according to one of the preceding claims, characterized in that additional waste material and/or sewage sludge and/or biological refuse is added in suspension or as a compressed mass.

7. Process according to one of the claims 1 to 6, characterized in that trace elements, e. g. Fe, Cu, Co, Mo, Zn, Mn, B, Mg are added to the mixture of bark and nitrogen carriers in dissolved form for accelerating the growth of the microorganisms.

8. Process according to one of the claims 1 to 7, characterized in that the end product after heat treatment is inoculated with microorganisms of the same type.

9. Process according to claim 8, characterized in that pure cultures of microorganisms in solid or suspended form, or an end product already colonized with microorganisms following storage is added as the inoculum.

## Revendications

1. Procédé pour fabriquer un générateur d'humus et un engrais naturels à partir d'écorce d'arbre fragmentée et éventuellement d'autres déchets de bois ou de plantes, dans lequel l'écorce est traitée à la vapeur surchauffée et un support azoté est ajouté avant ou pendant le traitement à la vapeur, caractérisé en ce qu'on ajoute des supports azotés facilement solubles et le mélange d'écorce et de supports azotés est soumis à un traitement par la vapeur à au moins 140 °C.

2. Procédé selon la revendication 1, caractérisé en ce qu'on utilise de la vapeur à haute ou à basse pression ayant une température qui peut atteindre 600 °C.

3. Procédé selon la revendication 1 ou 2, caractérisé en ce qu'on ajoute comme supports azotés des composés azotés synthétiques.

4. Procédé selon la revendication 3, caractérisé en ce que les composés azotés synthétiques sont ajoutés en solution.

5. Procédé selon l'une des revendications précédentes, caractérisé en ce qu'on ajoute en plus des matières fécales animales, telles que excréments de volailles, excréments de bovidés ou l'analogue.

6. Procédé selon l'une des revendications précédentes, caractérisé en ce qu'on ajoute en plus, en suspension ou en masse comprimée, des déchets d'abattoirs, et/ou des boues de curage et/ou des déchets biologiques.

7. Procédé selon l'une des revendications 1 à 6, caractérisé en ce qu'on ajoute au mélange d'écorce et de supports azotés des éléments sous forme de traces, par exemple Fe, Cu, Co, Mo, Zn, Mn, B, Mg en dissolution pour accélérer la croissance des microorganismes.

8. Procédé selon l'une des revendications 1 à 7, caractérisé en ce qu'on inocule au produit terminal, après traitement à la vapeur, des microorganismes spécifiques.

9. Procédé selon la revendication 8, caractérisé en ce qu'on ajoute comme substance à inoculer des cultures pures des microorganismes, sous forme solide ou en suspension, ou un produit terminal ayant déjà reçu des colonies de microorganismes après sédimentation.